# EUROPEAN PATENT APPLICATION

(11) **EP 1 513 079 A2**
(43) Date of publication of application: **09.03.2005**
(21) Application number: 04016153.1
(22) Date of filing: 08.07.2004
(51) Int. Cl.: G06F 17/30

(54) **File management system**

(30) Priority: 08.07.2003 JP 2003193299
(71) Applicant: KONICA MINOLTA BUSINESS TECHNOLOGIES, INC., Tokyo 100-0005 (JP)
(72) Inventor: Nishimura, Hiroyasu, Hachioji-shi Tokyo 192-8505 (JP)
(74) Representative: Henkel, Feiler & Hänzel

(57) **Abstract**

A file management system for handling a file and/or a subdirectory stored in a first directory in a storage, includes: a first management table which stores a first path name corresponding to the file and/or the subdirectory, the first path name indicates where the file and/or the subdirectory are stored in the first directory; and a file controller which manages the file and/or the subdirectory; wherein when the file controller creates a new file or a new subdirectory in the first directory, the first management table stores a new first path name corresponding to the new file or the new subdirectory, and the maximum number of the first path name corresponding to the file and/or the subdirectory, which is manageable in the first management table, is predetermined.

## Description

### BACKGROUND OF THE INVENTION

### Field of the Invention

The invention relates to a file management system, a file management apparatus and the like which is capable of improving access speed in a file system under which file management in a storage such as a hard disk device or the like is performed with a directory structure. In particular, the invention relates to a file management system, a file management apparatus which are appropriate to an image forming apparatus such as a copying machine, a digital complex machine or the like, having a function to store image data obtained by reading a document, and also relates to an image forming apparatus including such file management system and/or file management apparatus.

### Description of Related Art

These days, an image forming apparatus such as a copying machine having a copying function, a digital complex machine having the copying function, a scanner function, a printer function, a facsimile function and the like, further has a function to store a read document image as electronic data (image data) in a large-capacity storage device such as a hard disk device (HDD) or the like. With the use of this function, based on user's instruction, it is possible to transmit the image data stored in the storage to an external device through a communication line, and to re-print the image data afterward.

The large-capacity storage device such as a hard disk device requires longer time for data access than a storage medium such as a semiconductor memory or the like. Therefore, in order to prevent drawback in the operation as an image forming apparatus, there have been various types of proposals to reduce access time.

For example, in consideration of the fact that the data transfer rate becomes slower as the accessing track approaches inner circumference, provided is an image forming apparatus which classifies data according to required transfer rate and allocates data requiring high speed transfer at outer circumference (see Japanese Patent Application Publication (Unexamined) No. Tokukaihei 9-321962 and Japanese Patent Application Publication (Unexamined) No. Tokukaihei 11-291564).

If data is stored in a large-capacity storage such as a hard disk device or the like, in view of easiness, expandability, versatility and the like of the management, data is generally managed as file format with the use of a file system. The file system has a directory system, and manages file locations hierarchically according to a tree structure. In order to designate a file externally, a path name and a file name which indicate a file location in a tree structure is used.

The file system stores management information indicating each file exists at which path within a tree structure in the storage device itself for the management purpose. When configuration information of a file existing under a directory designated by a path name is to be obtained or to be opened, the file system is supposed to access the storage device to obtain necessary management information, and to copy the information to a main memory for the purpose of access afterward. Therefore, as the hierarchy of a tree structure becomes deeper and therefore a path becomes longer, the access frequency to the storage device increases, and thereby obtaining the aimed file information requires longer time. In addition, if the number of files at the identical path increases, the access frequency to the storage device increases, and thereby obtaining file configuration information may require longer time.

In an image forming device such as digital complex machine or the like, if a process to distribute one directory for each document and to store one page of each document as one file under the directory is performed, when there are a large number of pages, a large number of files exist under one directory. For example, if more than 1000 or 10000 files are entered under one directory, there is a case in which it takes several minutes or tens of minutes to obtain configuration information of a file existing under the directory or to delete the file, from the time that a path name is designated. Therefore, there are problems such as having a user wait for a long time, causing a specific application a time-out error, and the like.

### SUMMARY OF THE INVENTION

The present invention was made in view of the problems of the above-mentioned conventional art, and an object thereof is to provide a file management system and a file management apparatus capable of reducing access speed drop in conjunction with increase of the number of files existing at the same path, and also to provide an image forming apparatus to which the file management system and/or the file management apparatus is applied.

In accordance with a first aspect of the present invention, a file management system for handling a file and/or a subdirectory stored in a first directory in a storage, comprises: a first management table which stores a first path name corresponding to the file and/or the subdirectory, the first path name indicating where the file and/or the subdirectory are stored in the first directory; and a file controller which manages the file and/or the subdirectory; wherein when the file controller creates a new file or a new subdirectory in the first directory, the first management table stores a new first path name corresponding to the new file or the new subdirectory, and the maximum number of the first path name corresponding to the file and/or the subdirectory, which is manageable in the first management table, is predetermined.

According to the system of the first aspect of the present invention, when the number of files and/or subdirectories under a first directory is to exceed the predetermined number by storing a new file or a new subdirectory, the new file or a new subdirectory is created under the first directory and a first path name corresponding to the new file or the new subdirectory is stored in a first management table. Thereby, it is possible to manage a new file or a new subdirectory based on the first management table.

Preferably, in the system of the first aspect of the present invention, in a situation that the number of the file and/or the subdirectory stored in the first directory is equal to the maximum number, when an instruction that the file controller creates the new file in the first directory is generated, the file controller creates the new subdirectory in the first directory, and moves at least one of the new file created, the file and/or the subdirectory already stored, into the new subdirectory so that the number of the file and/or the subdirectory to be stored in the first directory becomes not more than the maximum number.

According to the above-mentioned system, a part of or all of a created new file, stored files and/or subdirectories existing under a first directory are moved into a new subdirectory so as to make the number of files existing under the first directory not more than predetermined number. Thereby, even if a large number of files seem exteriorly to exist under the first directory, it is possible to prevent the reduction of access speed in conjunction with increase of the number of files.

Preferably, in the system of the first aspect of the present invention, in a situation that the number of the file and/or the subdirectory stored in the first directory is equal to the maximum number, when an instruction that the file controller creates the new file in the first directory is generated, the file controller creates the new subdirectory in the first directory, and moves at least the file or the subdirectory already stored, into the new subdirectory so that the number of the file and/or the subdirectory to be stored in the first directory becomes not more than the maximum number.

According to the above-mentioned system, a part of or all of files and/or subdirectories existing under a first directory are moved into a new subdirectory so as to make the number of files existing under the first directory not more than predetermined number. Thereby, even if a large number of files seem exteriorly to exist under the first directory, it is possible to prevent the reduction of access speed in conjunction with increase of the number of files.

Preferably, in the system of the first aspect of the present invention, in a situation that the number of the file and/or the subdirectory stored in the first directory is equal to the maximum number, when an instruction that the file controller creates the new file in the first directory is generated, the file controller moves at least one of the new file created, the file and/or the subdirectory already stored, so that the number of the file and/or the subdirectory to be stored in the first directory becomes not more than the maximum number.

According to the above-mentioned system, a part of or all of a created new file, files and/or subdirectories existing under a first directory are moved so as to make the number of files existing under the first directory not more than predetermined number. Thereby, even if a large number of files seem exteriorly to exist under the first directory, it is possible to prevent the reduction of access speed in conjunction with increase of the number of files.

Preferably, in the system of the first aspect of the present invention, in a situation that the number of the file and/or the subdirectory stored in the first directory is equal to the maximum number, when an instruction that the file controller creates the new file in the first directory is generated, the file controller moves at least the file or the subdirectory already stored, so that the number of the file and/or the subdirectory to be stored in the first directory becomes not more than the maximum number.

According to the above-mentioned system, a part of or all of files and/or subdirectories existing under a first directory are moved so as to make the number of files existing under the first directory not more than predetermined number. Thereby, even if a large number of files seem exteriorly to exist under the first directory, it is possible to prevent the reduction of access speed in conjunction with increase of the number of files.

Preferably, in the system of the first aspect of the present invention, the file controller creates the first path name corresponding to the moved file and/or the moved subdirectory, which indicates where the moved file and/or the moved subdirectory are actually stored in a new location, and a second path name corresponding to the moved file and/or the moved subdirectory, which indicates where the moved file and/or the moved subdirectory are seemingly stored in the first directory, and the file management system further comprises a second management table which stores the first path name and the second path name so as to correspond each other.

According to the above-mentioned system, by storing a first path name which indicates a storing location after moving a file, and a second path name which indicates an original storing location in the first directory so as to correspond each other in a second management table, it is possible to manage a file so as to relate an original storing location and a storing location after moving the file.

Preferably, in the system of the first aspect of the present invention, when the file management system is electrically connected with a file viewer which views the file and/or the subdirectory stored in the storage, the file management system provides the second path name to the file viewer.

According to the above-mentioned system, by providing a second path name to a file viewer, it is possible to refer to a file and/or a subdirectory based on the second path name.

Preferably, in the system of the first aspect of the present invention, when an instruction that the file controller opens the file stored in the storage based on the second path name is generated, the file controller recognizes the first path name corresponding to the second path name in accordance with the second management table, and opens the file based on the first path name.

According to the above-mentioned system, if an instruction to open a file stored in a storage based on a second path name is generated from a file viewer, it is possible to open the file based on a first path name loaded according to a corresponding second path name. Thereby, even if a controller has moved a file, it is possible to generate an instruction to open a file based on a second path name indicating an original storing location from the file viewer.

Preferably, in the system of the first aspect of the present invention, when an instruction that the file controller stores the opened file based on the second path name after changing a content of the file is generated, the file controller recognizes the first path name corresponding to the second path name in accordance with the second management table, and stores the file based on the first path name.

According to the above-mentioned system, if an instruction to store an opened file based on a second path name is generated from the file viewer, it is possible to store the file based on a first path name loaded according to the corresponding second path name. Thereby, even if a controller has moved a file, it is possible to generate an instruction to store the file based on a second path name which indicates an original storing location.

Preferably, in the system of the first aspect of the present invention, when an instruction that the file controller deletes the file and/or the subdirectory stored in the storage based on the second path name is generated, the file controller recognizes the first path name corresponding to the second path name in accordance with the second management table, and deletes the file and/or the subdirectory based on the first path name.

According to the above-mentioned system, if an instruction to delete a file or a subdirectory stored in a storage based on a second path name is generated, it is possible to delete the file or the subdirectory based on a first path name loaded according to the corresponding second path name. Thereby, even if a controller has moved a file or a subdirectory, it is possible to generate an instruction to delete a file or a subdirectory based on a second path name which indicates an original storing location.

In the system of the first aspect of the present invention, when an instruction that the file controller outputs the file stored in the storage based on the second path name is generated, the file controller recognizes the first path name corresponding to the second path name in accordance with the second management table, and outputs the file based on the first path name.

According to the above-mentioned system, if an instruction to output an image of a file stored in a storage based on a second path name, it is possible to output an image of the file based on a first path name loaded according to the corresponding second path name. Thereby, even if a controller has moved a file, it is possible to generate an instruction to output an image of a file based on a second path name which indicates an original storing location from the file viewer.

Preferably, in the system of the first aspect of the present invention, the maximum number of the first path name corresponding to the file and/or the subdirectory is adjustable.

According to the above-mentioned system, since it is possible to set the number of files and/or subdirectories that a first directory is capable of storing therein according to the reduction of access speed, it is possible to secure high speed access.

Preferably, in the system of the first aspect of the present invention, the first management table is stored in the storage.

According to the above-mentioned system, it is possible to store a first directory and a first management table in the same storage.

Preferably, in the system of the first aspect of the present invention, the second management table is stored in the storage.

According to the above-mentioned system, it is possible to store a first directory and a second management table in the same storage.

In accordance with a second aspect of the present invention, an image forming apparatus comprises the above-mentioned file management system.

According to the apparatus of the second aspect of the present invention, even if a document having a large number of pages is stored, it is possible to secure high speed access.

Preferably, the apparatus of the second aspect of the present invention, further comprises the file viewer which views the file and/or the subdirectory stored in the storage.

According to the above-mentioned apparatus, it is possible to refer to a file and/or a subdirectory based on a second path name.

In accordance with a third aspect of the present invention, a file management apparatus manages a plurality of files in a directory designated from outside of the apparatus, wherein the file management apparatus manages the files so that the number of the files stored in each directory is not more than the maximum number by sorting the files in a plurality of subdirectories.

According to the apparatus of the third aspect of the present invention, a plurality of files that are to exist in one directory designated with a path name from outside are sorted according to internal management so as to make the number of files existing under each directory not more than predetermined upper-limit number. Thereby, even if a large number of files seem exteriorly to exist in the same directory, it is possible to prevent the reduction of access speed in conjunction with increase of the number of files.

In accordance with a fourth aspect of the present invention, an image forming apparatus comprises: the above-mentioned file management apparatus, a storage which stores data including image data generated in accordance with a document, and a file system which manages the data stored in the storage as a file format, and uses a path in designating the file.

According to the apparatus of the fourth aspect of the present invention, even if a document having a large number of pages is stored, it is possible to secure high speed access.

In accordance with a fifth aspect of the present invention, a file management apparatus manages a plurality of files in a directory designated from outside of the apparatus, wherein when the number of the files stored in a directory designated from outside of the apparatus becomes more than the maximum number, the file management apparatus creates a subdirectory in the directory designated, and sorts a part of the files or all of the files in the subdirectories so that the number of the files stored in the directory is not more than the maximum number by sorting.

According to the apparatus of the fifth aspect of the present invention, it is possible to simplify the internal management with subdirectories. Further, since paths to the original directory are identical, there is no unnecessary path search, and thereby it contributes to speeding up the access.

Preferably, in the apparatus of the fifth aspect of the present invention, the file management apparatus creates a new subdirectory in the directory designated, when the number of the files stored in the subdirectory becomes more than the maximum number.

According to the above-mentioned apparatus, since subdirectories are sequentially created and increased according to need, it is possible to prevent the reduction of access speed in conjunction with increase of the number of subdirectories.

Preferably, in the apparatus of the fifth aspect of the present invention, the information indicating a relationship between a file name of the file and a directory name of the directory storing the file is stored in a storage accessible at higher speed than the storage.

According to the above-mentioned apparatus, it is possible to immediately obtain file path division information, and further it is possible to secure high speed access as a result of reduction of overhead in conjunction with conversion into a subdirectory.

In accordance with a sixth aspect of the present invention, an image forming apparatus comprises: the above-mentioned file management apparatus, a storage which stores data including image data generated in accordance with a document, and a file system which manages the data stored in the storage as a file format, and uses a path in designating the file.

According to the apparatus of the sixth aspect of the present invention, even if a document having a large number of pages is stored, it is possible to secure high speed access.

### BRIEF DESCRIPTION OF THE DRAWINGS

The present invention will become more fully understood from the detailed description given hereinafter and the accompanying drawing given by way of illustration only, and thus are not intended as a definition of the limits of the present invention, and wherein:
FIG. 1 is a block diagram showing a structure of an image forming apparatus including a file control unit as a file management apparatus according to the embodiment of the present invention,
FIG. 2 is an explanatory view showing one example of a first management table generated and referred to by the file management apparatus according to the embodiment of the present invention,
FIG. 3 is an explanatory view showing a hierarchical structure of software in the image forming apparatus including the file control unit as the file management apparatus according to the embodiment of the present invention,
FIG. 4 is an explanatory view showing a comparison of file storing states between one seeming to an external application and one internally managed, in the case of applying a file management apparatus according to an embodiment of the present invention,
FIG. 5 is an explanatory view showing one example of file path division information (second management table) generated and referred to by the file management apparatus according to the embodiment of the present invention,
FIG. 6 is a flowchart illustrating an operation of the file control unit when the file control unit as the file management apparatus according to the embodiment of the present invention accepts an order to store a file from the external application,
FIG. 7 is a flowchart illustrating a file path conversion process executed by the file control unit as the file management apparatus according to the embodiment of the present invention,
FIG. 8 is a flowchart illustrating a subdirectory creating process executed by the file control unit as the file management apparatus according to the embodiment of the present invention,
FIG. 9 is a flowchart illustrating a subdirectory creating/file path conversion process executed by the file control unit as the file management apparatus according to the embodiment of the present invention,
FIG. 10 is a flowchart illustrating a operation of the file control unit when the file control unit as the file management apparatus according to the embodiment of the present invention accepts an order to obtain file configuration information from the external application, and
FIG. 11 is a flowchart illustrating a file structure generating process executed by the file control unit as the file management apparatus according to the embodiment of the present invention.

### EMBODIMENTS OF THE INVENTION

Hereinafter, with reference to figures, an embodiment of the present invention will be described.

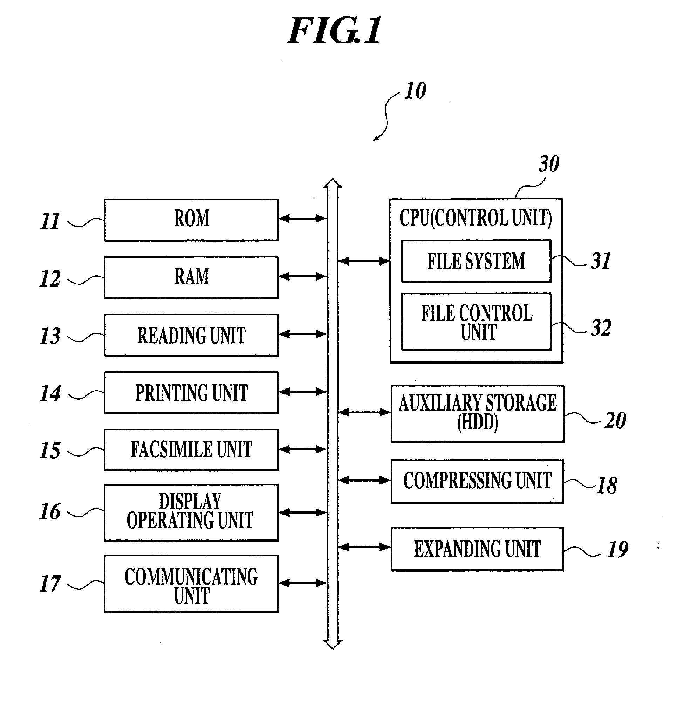

FIG. 1 is a view showing a structure of an image forming apparatus 10 including a file control unit as a file management apparatus according to the embodiment of the present invention. The image forming apparatus 10 is structured as a digital complex machine having a copy function for reading a document, for forming the corresponding image on recording paper and for outputting it, a scanner function, a printer function, a facsimile function and the like. Further, the image forming apparatus 10 also has a function for compressing image data obtained by reading the document and for storing it, a function for transmitting the stored data to an external device with the use of an e-mail or FTP (File Transfer Protocol), a function for reading out the stored image to be printed, and the like.

In order to achieve such functions, the image forming apparatus 10 comprises a CPU (Central Processing Unit) 30 as a controller to centrally control operations of the whole apparatus, a ROM (Read Only Memory) 11 and a RAM (Random Access Memory) 12 as main units. The ROM 11 stores programs to be executed by the CPU 30, and various types of fixed data. The RAM 12 works as a work memory which temporarily stores various types of data when the CPU 30 executes a program, and also works as a page memory which stores image data at least as much as one page for applying a rotation process or the like.

The reading unit 13 achieves a function to read a document image and to take the corresponding image data in. The reading unit 13 comprises a light source for irradiating light toward a document, a line image sensor for reading the document line-byline in its width direction, a moving section for moving a reading position in a longitudinal direction of the document, the reading position being provided as a unit of line, and an optical path for leading reflected light from the document to the line image sensor for imaging, the optical path comprising a lens and a mirror. The line image sensor comprises a CCD (Charge Coupled Device). Analog signals outputted by the line image sensor are A/D-converted, and is further binarized according to the error diffusion process or the like.

The printing unit 14 achieves a function to form an image corresponding to image data, on recording paper according to the electrophotography process to be outputted. The printing unit 14 is structured as the so-called laser printer, which comprises a conveying device for recording paper, a photo conductor drum, a charging device, a laser unit, a developing device, a transferring/separating device, a cleaning device and a fixing device. The facsimile unit 15 is a part for functioning as a facsimile. The facsimile unit 15 achieves a function for compressing/elongating image data according to a compression technology corresponding to the facsimile communication, and a function to control various types of communication procedures for transmitting/receiving facsimile.

The display operating unit 16 comprises a liquid crystal display and various types of operation switches. The display operating unit 16 has a function to provide a user with various types of guide displays and states displays, and a function to accept various types of operation from the user. The communicating unit 17 achieves a function to establish connection to a phone line or various types of networks for communicating.

The compressing unit 18 achieves a function to compress image data, and the elongating unit 19 achieves a function to expand compressed data into original image data. The auxiliary storage 20 is a storage device having large capacity. Here, a hard disk device is used as the auxiliary storage 20. The auxiliary storage 20 is used for storing compressed image data and various types of management data.

The CPU 30 as a controller, achieves a function as a file system 31 and a control unit 32. The file system 31 achieves a management function to store various types of data as file format in the auxiliary storage 20. The file system 31 carries out a function to create a directory in the auxiliary storage 20 under which a file and its entry are stored, a function to move/delete the file and the entry, and a function to manage file attribute information. File locations and directory locations in the file system 31 are managed according to a tree structure with a root directory set as the top of the tree structure. Path is defined as a route from the top to the intended file or directory along the tree structure, and path name describes the route. Here, since a file and a path are managed as one-to-one respectively so as to correspond each other, as a result, the number of file and that of path are same.

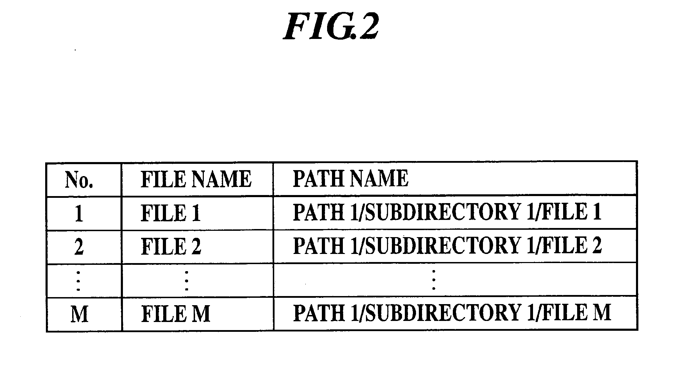

FIG. 2 is a view showing one example of a first management table in which a file name and a first path name indicating a storing location of the file are registered. Here, if a file having a file name "FILE 1" is stored under a subdirectory "SUBDIRECTORY 1" which exist just under a directory "PATH 1", a path name is described as "PATH 1/SUBDIRECTORY 1/FILE 1", and this file name and the path name are registered so as to correspond each other in the first management table. And so on, files having file names "FILE 2" to "FILE M" and path names corresponding to respective these file names are registered so as to correspond each other in the first management table. Hereafter, a path name registered in the first management table is referred to as first path name. In addition, if a subdirectory is stored, as well as what is mentioned above, a subdirectory name and a first path name indicating a storing location of the subdirectory are registered so as to correspond each other in the first management table.

If a new file is to be opened or configuration information of a file is to be obtained, an application designates a file name including a path name to access the file system 31. For example, when the file system 31 accepts a request from the application to open a file which already exists, the file system 31 obtains a file control block of the corresponding file from the auxiliary storage 20 based on the designated path name, moves the obtained block to a main memory and returns an identification number of the file control block (file handle) to the application. Thereafter, the application performs reading/writing on the file with the use of the file handle. In the file control block, a path name and a file name of the file, address information of where the file is actually stored within the auxiliary storage 20, and various types of attribute information are registered.

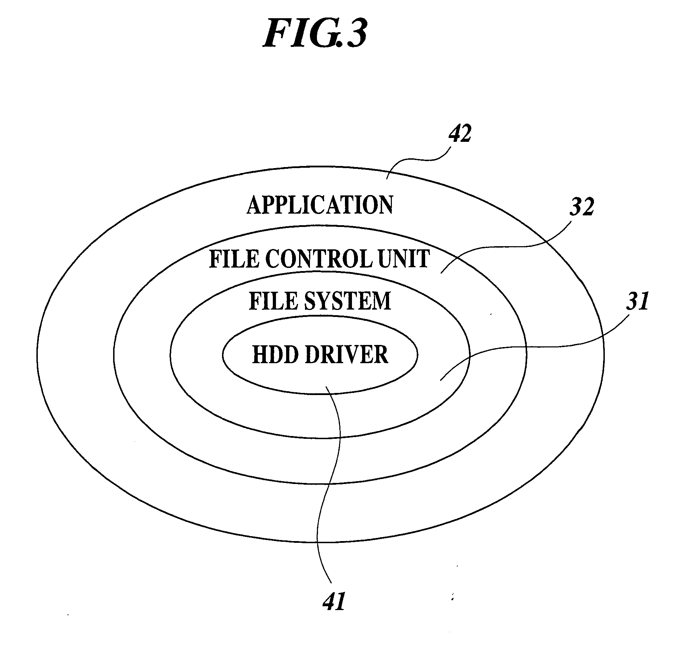

The file control unit 32 achieves a function as a file management apparatus in the present invention. FIG. 3 is a view showing a hierarchical structure of software associated with the auxiliary storage 20, and as the location is closer to the center, association with the hardware becomes stronger. The center of the hierarchical structure is a HDD driver 41 for dealing with input/output instructions to the auxiliary storage 20 or the like, and at the outside of the HDD driver 41, the file system 31 exists.

The file control unit 32 is located outside of the file system 31, and is intervened between the application 42 and the file system 31. The file control unit 32 achieves a function to create a subdirectory so as not to allow more than predetermined upper-limit number of files to exist under one directory managed by the file system 31. Further, the file control unit 32 achieves a function to internally manage file locations by distributing file storing locations in the subdirectories.

In other words, if the number of files under one directory designated with a path name by the external application 42 (hereafter, it is referred to as original directory) is to exceed the predetermined upper-limit number, that is, if a file and/or a directory is to be newly made under a circumstance in which the number of files existing under one directory is as many as the predetermined upper-limit number, the file system 31 achieves a function to create one or more directory as a subdirectory under the original directory, and to distribute a plurality of files which would exist under the original directory to the subdirectory to be stored so as to make the number of files under one subdirectory not more than the upper-limit number. The information that files are distributed to subdirectories to be stored is concealed from the external application 42, and therefore it seems to the external application 42 that files exists under the original directory.

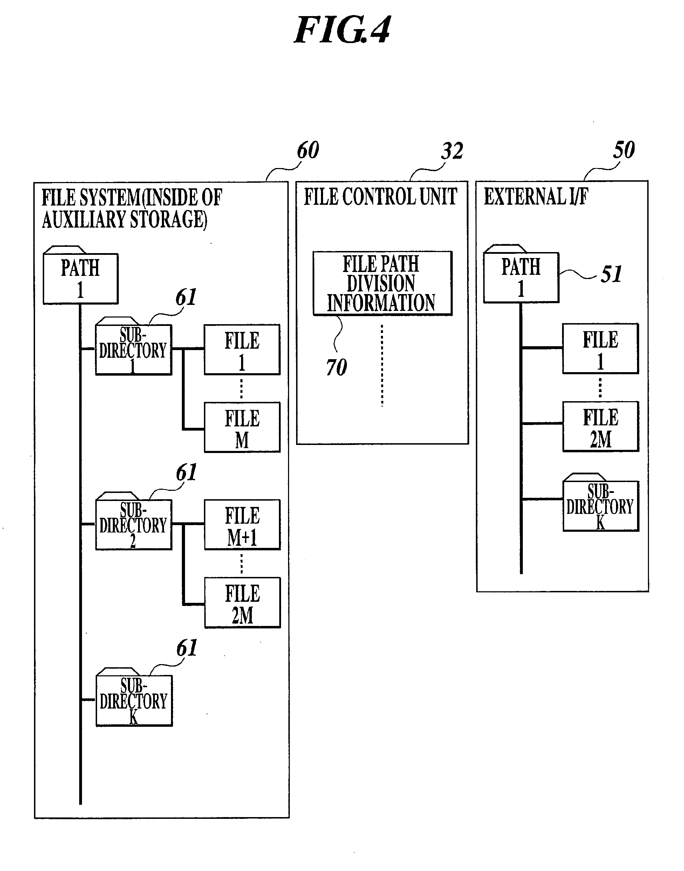

FIG. 4 is a view showing comparison of file storing states between one seen from the external application 42 and one internally managed by the file control unit 32. Within a right frame 50 of FIG. 4, what is shown is the file storing state seen from the application 42, and within a left frame 60 of FIG. 4, what is shown is the file storing state internally managed by the file control unit 32. To the external application 42, it seems that files from "1" to "2M" and a subdirectory K are stored in the original directory 51. Here, it is assumed that the file storing state shown within the frame 50 is a file storing state before the file control unit 32 performs a distribution process according to the internal management function.

On the contrary, in the file system 31, subdirectories 61 "1" and "2" are made under the original directory 51, and the files "1" to "2M", which seem to be stored under the original directory 51, are distributed to be stored under the plurality of subdirectories 61 "SUBDIRECTORY 1" and "SUBDIRECTORY 2". According to the example of FIG. 4, the upper-limit number of files which can be stored under one subdirectory 61 are set "m". Here, a relation between M and m is M < m, and m is not a physical management capability value, but a value which is predetermined in consideration of access speed reduction at the time of, as mentioned, obtaining file information, displaying and storing a file and the like. Here, a value of "m" is changeable. Further, the number of subdirectories 61 to be made is not limited to this example, and it is assumed that it is appropriately made according to the number of files and/or subdirectories to be distributed.

In this way, the first path name, which indicates a storing location of a file and/or subdirectory before the file and/or subdirectory is moved, which is distributed so as to make the number of files and/or subdirectories existing under one directory not more than m by the file control unit 32 (actual storing location), is stored in the above-mentioned first management table. In the example of FIG. 4, the file storing state shown within the frame 60 is registered as a first path name in the first management table.

Further, a second path name which indicates a storing location of a file and/or subdirectory under the original directory before the file and/or subdirectory is moved (seeming storing location) is generated, and a second management table in which the first path name and the second path name are registered so as to correspond each other, as file path division information 70 in the RAM 12. In the example of FIG. 4, the file storing state shown within the frame 50 is generated as the second path name, and the first path name and the second path name are registered in the file path division information 70 so as to correspond each other.

By providing the external application 42 (file viewer) with the second path name as information regarding a file and/or subdirectory, when the file and/or subdirectory is to be displayed on the external application, the display is done as if the file and/or subdirectory were stored in the storing location before the file and/or subdirectory is moved. On the contrary, since files are managed so as to make the number of files and/or directories existing under one directory not more than m in reality, it is possible to prevent from reducing processing speed more than allowable range at the time of obtaining file information, displaying and storing a file and the like.

Here, it is assumed that the first path name includes a path name indicating an actual storing location (hereafter, it is referred to as division path name) and a file name, and that the second path name includes a path name indicating a seeming storing location (hereafter, it is referred to as original path name) and a file name.

When the file control unit 32 creates a new file under a subdirectory 61, the file control unit 32 registers a second path name of the file and a first path name of the file so as to correspond each other in the file path division information 70. Further, when the file control unit 32 accepts a request to open a file or obtain file configuration information with the external application 42 designating a second path name, the file control unit 32 converts the designated original path name into a first path name by referring to the file path division information 70, and accesses to the file system 31 with the use of the converted first path name.

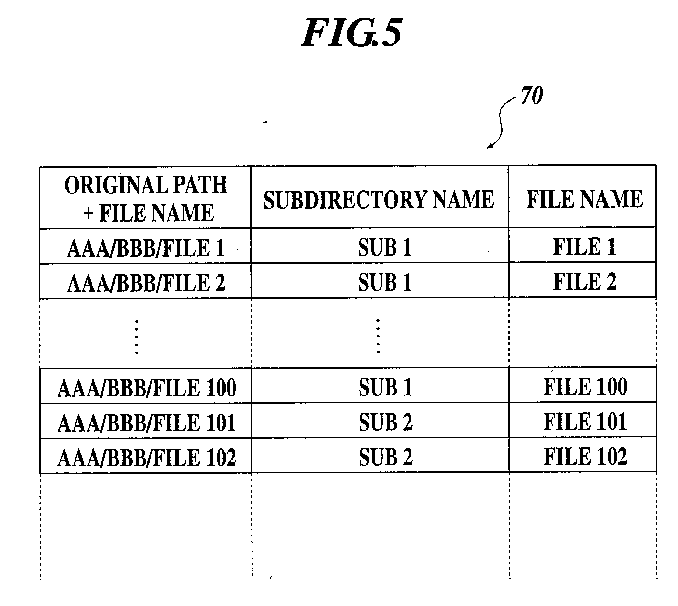

FIG. 5 is a view showing an example of the file path division information 70. In the file path division information 70, a file name including an original path name, a file name and a subdirectory name are registered so as to relate each file name including an original path name to a file name and a subdirectory name of a subdirectory under which the file is stored. In the example shown in FIG. 5, what is registered is that 100 files "file 1" to "file 100" which seem to the external application 42 to be stored under a directory having original path name "AAA/BBB" are in reality stored under a subdirectory "Sub 1" made under the original path. In addition, what is further registered is that files "file 101" and after "file 101" which seem to the external application 42 to be stored under a directory having original path name "AAA/BBB" are in reality stored under a subdirectory "Sub 2" made under the original path.

Next, an operation flow of the file control unit 32 will be described. As mentioned above, since a file operation is performed according to a file handle after the file is opened, the file control unit 32 is associates with the operation only when the file is to be opened and file configuration information is to be obtained.

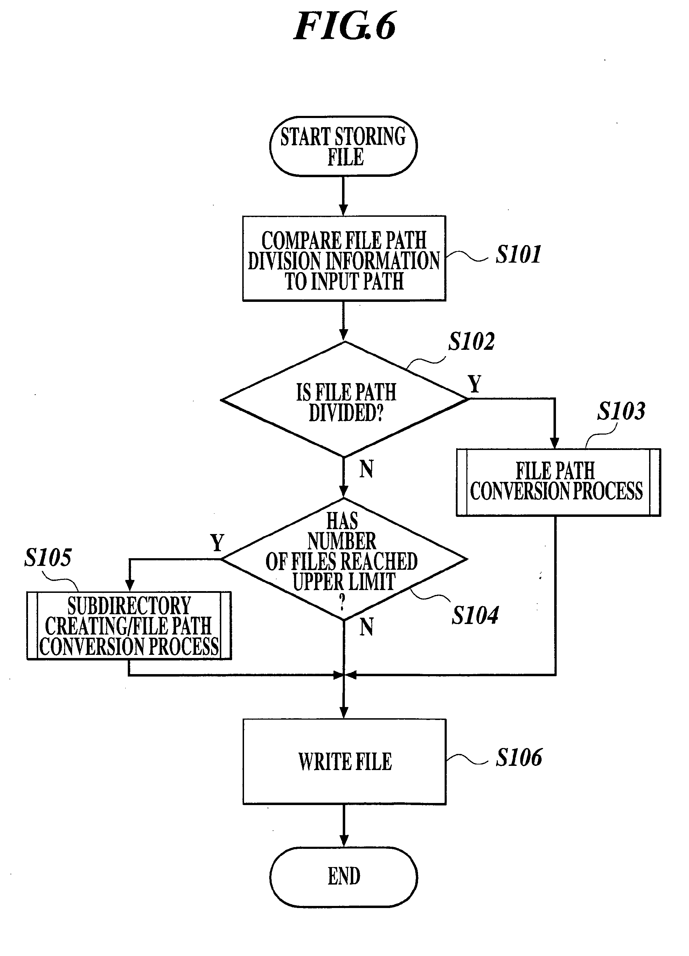

FIG. 6 is a view showing an operation flow of the file control unit 32 when accepting a file storing order (write/open order) from the external application 42. The file control unit 32 searches the file path division information 70 with an original path name designated by the application 42 to see whether the corresponding original path is divided (whether a subdirectory is made under the original path or whether the first path name and the second path name are managed so as to correspond each other) (Step S101).

If it is divided (Step S102; Y), the file control unit 32 performs a file path conversion process to convert an original path name into a division path name (Step S103). Then, the file control unit 32 writes data required by the application 42 to a file identified according to the division path name and the file name (Step S106). If the original path is not divided (Step S102; N), the file control unit 32 judges whether the number of files existing under the original path reaches predetermined upper-limit number (Step S104). For example, the number of upper limit is set to "100".

If it does not reach the upper-limit number (Step S104; N), the file control unit 32 writes data required by the application 42 to a file identified according to the designated original path name and the file name (Step S106). If the number of files reaches the upper-limit number (Step S104; Y), the file control unit 32 creates a subdirectory under a directory described by the original path name, and converts the original path name into a division path name by adding a name of the subdirectory (Step S105). Thereafter, the file control unit 32 writes data required by the application 42 to a file identified according to the division path name and the file name (Step S106).

In either case, if the file number under one directory exceeds predetermined upper-limit number by creating a file, by performing the above-mentioned control, it is possible to suppress the number of files and/or subdirectories under one directory not more than the upper-limit number. Here, what is described above is the case that information of the number of files which are already stored is obtained at the time of writing. However, the present invention is not limited to such a case. Obtaining the number of files may be done at any time, such as when the image forming apparatus 10 is powered on.

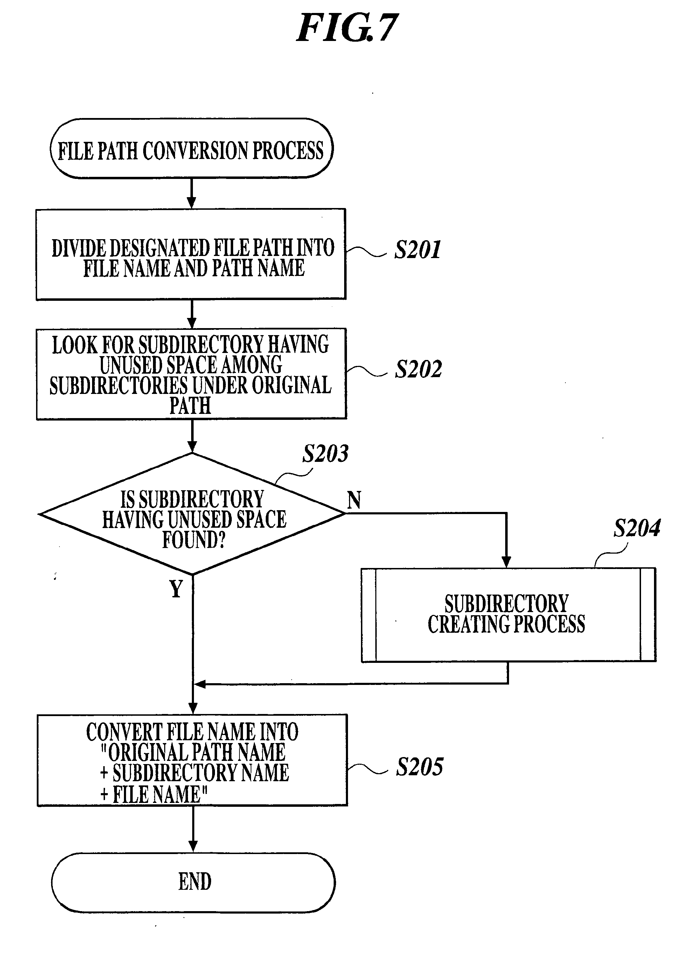

FIG. 7 is a view showing a flow of the file path conversion process. The file path conversion process divides a file path name designated by the application 42 into a file name and a path name (original path name) (Step S201), and searches for a subdirectory under which the number of entered files has not reached the upper-limit number, among subdirectories made under a directory described by the original path name (Step S202).

If there is no available subdirectory having vacant entry (Step S203; N), the file control unit 32 performs a subdirectory creating process for newly creating a subdirectory (Step S204). In this way, or if there is available subdirectory having vacant entry, the original file path is converted into the division path so as to enter the file under the subdirectory (Step S205). For example, in the case of an original path name "AAA/BBB", file name "file 101" and a subdirectory name "Sub 1", a division path name after the conversion is "AAA/BBB/Sub 1/file 101".

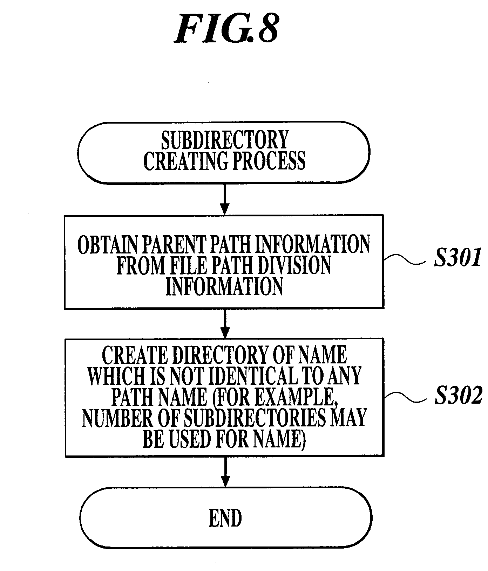

FIG. 8 is a view showing a flow of the subdirectory creating process. In the subdirectory creating process, first, the file control unit 32 obtains entry information of a parent directory under which a subdirectory is to be made, with reference to the file path division information 70 (Step S301). Then, the file control unit 32 creates a subdirectory having a name which is not identical to any subdirectory name that already exists (Step S302). For example, it can be simplified by using the number of subdirectories which have already been made.

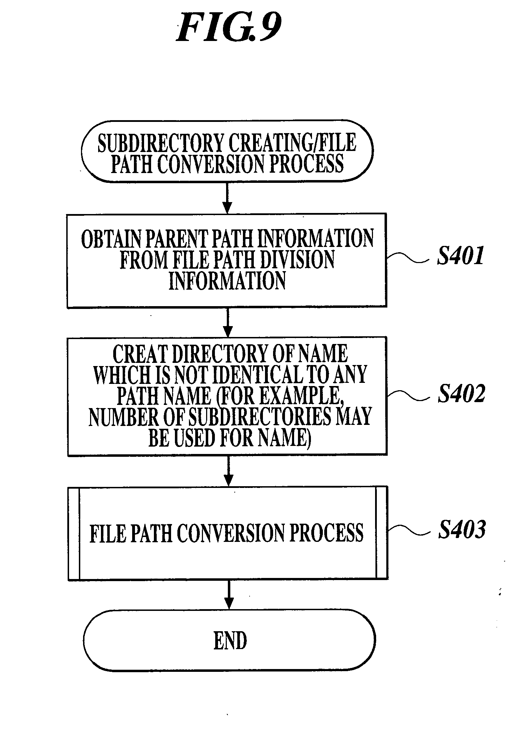

FIG. 9 is a view showing a flow of the subdirectory creating/file path conversion process, which is called up in Step 105 of FIG. 6. The file control unit 32 obtains entry information of a parent directory under which a subdirectory is to be made with reference to the file path division information 70 (Step S401), and then creates a subdirectory having a name which is not identical to any subdirectory name that already exists (Step S402). Then, the file control unit 32 performs the file path conversion process shown in FIG. 7, and ends the process. In other words, a new subdirectory is made, and a file path is converted so as to enter a file under the subdirectory.

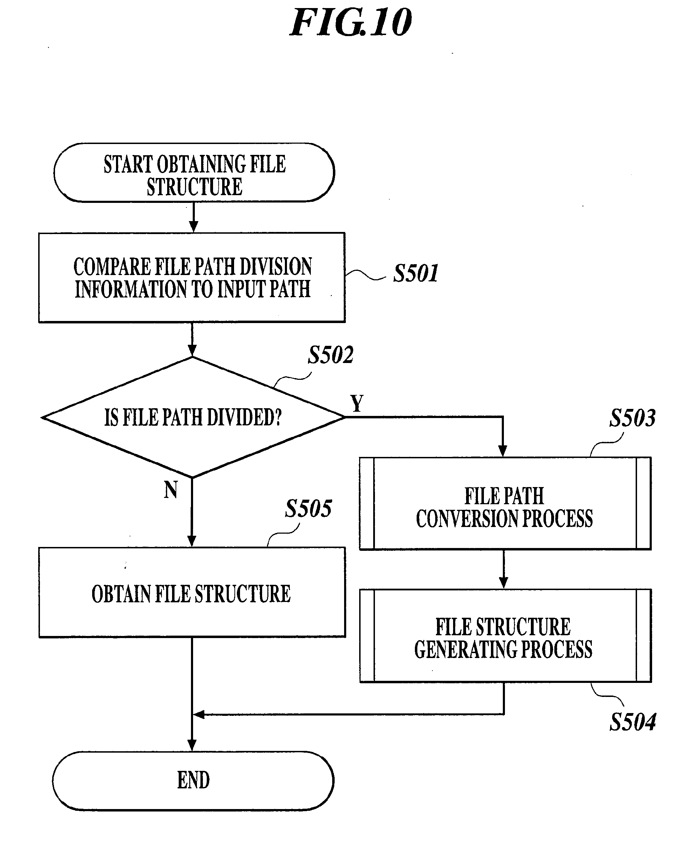

FIG. 10 is a view showing an operation flow of the file control unit 32 when accepting an order from the external application 42 to obtain file configuration information. The file control unit 32 searches the file path division information 70 with an original path name designated by the application 42 to see whether the original path is divided (Step S501). If it is divided (Step S502; Y), the file control unit 32 performs the file path conversion process to convert the original path name into a division path name (Step S503), and then performs a file structure generating process (Step S504).

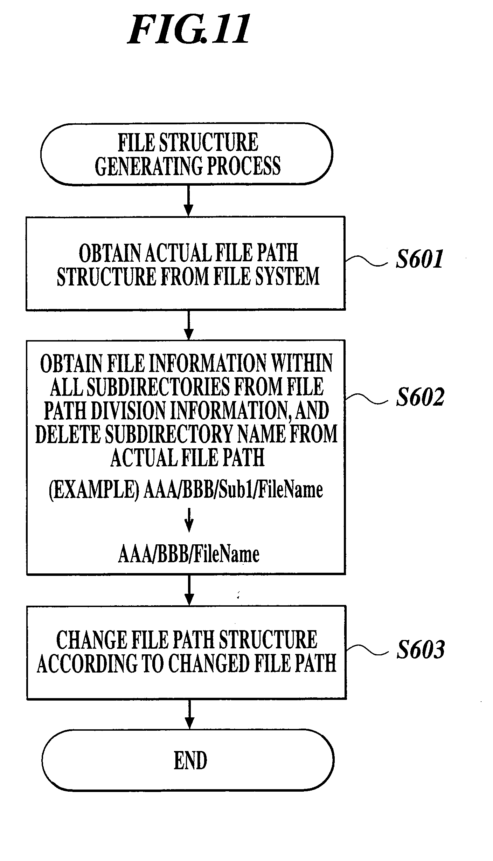

FIG. 11 is a view showing a flow of the file structure generating process. In the file structure generating process, first, the file control unit 32 obtains an actual file path structure from the file system 31 (Step S601). In other words, according to the file path conversion process that has been performed beforehand, all the names of subdirectories made under the original path are recognized, and all the file names entered under these subdirectories are extracted.

Next, the file control unit 32 changes a file path name by deleting a part of the subdirectory name from the obtained actual file path name (Step S602). Then, the file control unit 32 changes a file path structure according to the changed file path name (Step S603). For example, if a division path name is "AAA/BBB/Sub 1/file 1", the file path is changes by deleting a part of "Sub 1", which is the subdirectory name, into a file path "AAA/BBB/file 1".

If the original path is not divided in Step S502 of FIG. 10 (N), the file control unit 32 obtains structure information having original path name as-is (Step S505).

As above, described is an embodiment of the present invention with reference to figures. However, concrete structures are not limited to the embodiment, and therefore change and addition may be made without departing from the gist of the present invention. For example, in the embodiment, described is the case that a subdirectory is made under an original path designated by the application 42. However, a subdirectory may be made at another location.

In the present embodiment, while the number of files and/or subdirectories stored under a first directory are equal to predetermined number, if the file control unit 32 generates an instruction to create a new file under the first directory, processes may be performed in the following way.

The CPU 30 creates a new subdirectory under the first directory, and moves a part of or all of already-stored files and/or subdirectories into the new subdirectory. Thereby, the number of files and/or subdirectories stored under the first directory is set not more than predetermined number.

Further, the CPU 30 creates a new subdirectory under the first directory, and moves a new file and a part of or all of already-stored files and/or subdirectories into the new subdirectory. Thereby, the number of files and/or subdirectories stored under the first directory is set not more than predetermined number.

Further, the CPU 30 moves a new file and a part of or all of already-stored files and/or subdirectories. Thereby, the number of files and/or subdirectories stored under the first directory is set not more than predetermined number.

Further, the CPU 30 moves a part of or all of already-stored files and/or subdirectories. Thereby, the number of files and/or subdirectories stored under the first directory is set not more than predetermined number.

Here, what is illustrated is an operation at the time of instructing to store a file or a directory within the auxiliary storage 20 based on a second path name provided to the file viewer. However, if there is an instruction to delete a file or a subdirectory stored within the auxiliary storage 20 based on a second path name, the file or the directory may be deleted based on a first path name loaded according to the corresponding second path name with reference to the second management table.

Further, if there is an instruction to image-output a file stored within the auxiliary storage 20 based on a second path name, the file may be image-outputted based on a first path name loaded according to the corresponding second path name with reference to the second management table. Here, to image-output means an operation of the image forming apparatus 10 to print a file stored within the auxiliary storage 20, or to transfer or to transmit the file.

Further, in the embodiment above, described is the case that the first management table and the second management table (file path division information 70) are stored in the RAM 12, and the file path division information 70 is re-structured by an initial process at the time of powering on. However, the file path division information 70 may be stored within the auxiliary storage 20. Further, the first management table and the second management table may be stored in a storing section other than the RAM 12, or each of them may be stored in different storing sections from each other.

And so forth, in the present embodiment, described is the case that the file management apparatus is applied to the image forming apparatus 10. However, the file management apparatus may be individually structured, or may be applied to another apparatus.

Here, in the present embodiment, described is the example that while the CPU 30 having the file system 31 and the file control unit 32 is provided inside of the image forming apparatus 10, the application 42 being electrically connected to the image forming apparatus 10 is provided inside of a personal computer or the like which is externally provided or the like, the application 42 creates a file stored within the auxiliary storage 20. However, the present invention is not limited to this example. For example, the application 42 may be provided inside of the image forming apparatus 10 for displaying a file within the auxiliary storage 20 on the display operating unit 16 provided in an image device, and for printing a selected file.

Further, the auxiliary storage 20 which stores each file and/or subdirectory and the storing section which stores the first management table and the second management table may be provided inside of the image forming apparatus 10, or outside of the image forming apparatus 10 so as to make the file system 31 and the file control unit 32 available to be handled.

In other words, a file management system including the CPU 30 having the file system 31 and the file control unit 32, the auxiliary storage 20, the storing section and the application 42 may be provided inside of the image forming apparatus 10. Alternatively, the file management system may be structured so as to provide the CPU 30, the auxiliary storage 20 and the storing section, inside of the image forming apparatus 10 and the application 42 is provided externally so as to be connectable with the image forming apparatus 10. Further, the CPU 30 and the application 42 may be provided inside of the image forming apparatus 10 and the auxiliary storage 20 and the storing section may be provided outside of the image forming apparatus 10. Furthermore, the CPU 30 may be provided inside of the image forming apparatus 10, and the auxiliary storage 20, the storing section and the application 42 may be provided outside of the image forming apparatus so as to be connectable with the image forming apparatus 10

The entire disclosure of a Japanese Patent Application No. Tokugan 2003-193299 filed on July 8, 2003, including specifications, claims, drawings and summaries are incorporated herein by reference in their entirety.

## Claims

1. A file management system for handling a file and/or a subdirectory stored in a first directory in a storage comprising:
a first management table which stores a first path name corresponding to the file and/or the subdirectory, the first path name indicating where the file and/or the subdirectory are stored in the first directory; and
a file controller which manages the file and/or the subdirectory;
wherein when the file controller creates a new file or a new subdirectory in the first directory, the first management table stores a new first path name corresponding to the new file or the new subdirectory, and the maximum number of the first path name corresponding to the file and/or the subdirectory, which is manageable in the first management table, is predetermined.

2. The file management system of Claim 1, wherein in a situation that the number of the file and/or the subdirectory stored in the first directory is equal to the maximum number, when an instruction that the file controller creates a new file in the first directory is generated, the file controller creates a new subdirectory in the first directory, and moves at least one of the new file created, the file and/or the subdirectory already stored, into the new subdirectory so that the number of the file and/or the subdirectory to be stored in the first directory becomes not more than the maximum number.

3. The file management system of Claim 1, wherein in a situation that the number of the file and/or the subdirectory stored in the first directory is equal to the maximum number, when an instruction that the file controller creates a new file in the first directory is generated, the file controller creates a new subdirectory in the first directory, and moves at least the file or the subdirectory already stored, into the new subdirectory so that the number of the file and/or the subdirectory to be stored in the first directory becomes not more than the maximum number.

4. The file management system of Claim 1, wherein in a situation that the number of the file and/or the subdirectory stored in the first directory is equal to the maximum number, when an instruction that the file controller creates a new file in the first directory is generated, the file controller moves at least one of the new file created, the file and/or the subdirectory already stored, so that the number of the file and/or the subdirectory to be stored in the first directory becomes not more than the maximum number.

5. The file management system of Claim 1, wherein in a situation that the number of the file and/or the subdirectory stored in the first directory is equal to the maximum number, when an instruction that the file controller creates a new file in the first directory is generated, the file controller moves at least the file or the subdirectory already stored, so that the number of the file and/or the subdirectory to be stored in the first directory becomes not more than the maximum number.

6. The file management system of any one of Claims 2 to 5, wherein the file controller creates the first path name corresponding to the moved file and/or the moved subdirectory, which indicates where the moved file and/or the moved subdirectory are actually stored in a new location, and a second path name corresponding to the moved file and/or the moved subdirectory, which indicates where the moved file and/or the moved subdirectory are seemingly stored in the first directory, and the file management system further comprises a second management table which stores the first path name and the second path name so as to correspond each other.

7. The file management system of Claim 6, wherein when the file management system is electrically connected with a file viewer which views the file and/or the subdirectory stored in the storage, the file management system provides the second path name to the file viewer.

8. The file management system of Claim 7, wherein when an instruction that the file controller opens the file stored in the storage based on the second path name is generated, the file controller recognizes the first path name corresponding to the second path name in accordance with the second management table, and opens the file based on the first path name.

9. The file management system of Claim 8, wherein when an instruction that the file controller stores the opened file based on the second path name after changing a content of the file is generated, the file controller recognizes the first path name corresponding to the second path name in accordance with the second management table, and stores the file based on the first path name.

10. The file management system of Claim 7, wherein when an instruction that the file controller deletes the file and/or the subdirectory stored in the storage based on the second path name is generated, the file controller recognizes the first path name corresponding to the second path name in accordance with the second management table, and deletes the file and/or the subdirectory based on the first path name.

11. The file management system of Claim 7, wherein when an instruction that the file controller outputs the file stored in the storage based on the second path name is generated, the file controller recognizes the first path name corresponding to the second path name in accordance with the second management table, and outputs the file based on the first path name.

12. The file management system of any one of Claims 1 to 11, wherein the maximum number of the first path name corresponding to the file and/or the subdirectory is adjustable.

13. The file management system of any one of Claims 1 to 12, wherein the first management table is stored in the storage.

14. The file management system of any one of Claims 6 to 13, wherein the second management table is stored in the storage.

15. An image forming apparatus comprising the file management system of any one of Claims 1 to 14.

16. The image forming apparatus of Claim 15, further comprising the file viewer which views the file and/or the subdirectory stored in the storage.

17. A file management apparatus for managing a plurality of files in a directory designated from outside of the apparatus, wherein the file management apparatus manages the files so that the number of the files stored in each directory is not more than the maximum number by sorting the files in a plurality of subdirectories.

18. An image forming apparatus comprising:
the file management apparatus of Claim 17,
a storage which stores data including image data generated in accordance with a document, and
a file system which manages the data stored in the storage as a file format, and uses a path in designating the file.

19. A file management apparatus for managing a plurality of files in a directory designated from outside of the apparatus, wherein when the number of the files stored in a directory designated from outside of the apparatus becomes more than the maximum number, the file management apparatus creates a subdirectory in the directory designated, and sorts a part of the files or all of the files in the subdirectories so that the number of the files stored in the directory is not more than the maximum number by sorting.

20. The file management apparatus of Claim 19, wherein the file management apparatus creates a new subdirectory in the directory designated, when the number of the files stored in the subdirectory becomes more than the maximum number.

21. The file management apparatus of Claim 19, wherein the information indicating a relationship between a file name of the file and a directory name of the directory storing the file is stored in a storage accessible at higher speed than the storage.

22. An image forming apparatus comprising:
the file management apparatus of Claim 19,
a storage which stores data including image data generated in accordance with a document, and
a file system which manages the data stored in the storage as a file format, and uses a path in designating the file.
